# EUROPEAN PATENT SPECIFICATION

(11) **EP 2 837 751 B1**
(45) Date of publication and mention of the grant of the patent: **21.09.2016**
(21) Application number: 14180102.7
(22) Date of filing: 06.08.2014
(51) Int. Cl.: E04D 13/12, E04G 1/15

(54) **Platform for use as a walkway**
Plattform zur Verwendung als Fußweg
Plate-forme pour utilisation comme une passerelle

(30) Priority: 14.08.2013 GB 201314549
(43) Date of publication of application: 18.02.2015
(73) Proprietor: Coward, John Mark Leslie, Sandy, Bedfordshire SG19 3AH (GB)
(72) Inventor: Coward, John Mark Leslie, Sandy, Bedfordshire SG19 3AH (GB)
(74) Representative: Abraham, Richard

(56) References cited:
- EP-A1- 0 337 518
- DE-U1- 9 112 741
- FR-A1- 2 527 251
- FR-A1- 2 672 917
- GB-A- 496 969
- US-A- 4 053 140
- US-A- 4 315 389
- US-A- 6 085 867

## Description

The present invention relates to a walkway platform and a kit of parts and a method for constructing such a walkway platform.

It is known in the art to provide rooftop walkways comprising pre-assembled sections for installation on a roof to allow access for maintenance of the roof itself or to access equipment mounted on a roof Walkways in the art are generally either flimsy and therefore of limited durability or bulky and therefore difficult to install (especially where there are obstacles on a roof that may require time-consuming and costly modifications of the pre-assembled panels to fit around the obstacle).

FR2527251A1 and FR2672917A1 disclose existing platforms.

The present applicant has appreciated the need for an improved walkway that overcomes or at least alleviates problems with the prior art designs.

In accordance with a first aspect of the present invention, there is provided a method of constructing a platform according to claim 1.

In this way, a method of constructing a support structure is provided using modular components that can be readily coupled on-site thereby avoiding the need to move large and heavy pre-assembled sections to the location of the support structure. This is particularly advantageous in the case of a rooftop walkway in which components must be lifted onto the rooftop. In addition, the modular nature of the support structure allows the design of the structure to be readily modified on-site (e.g. to take account of unexpected obstacles) by cutting the elongate side supports to vary their length and/or coupling the at least one cross member at an inclined angle (e.g. acute angle) relative to the first and second elongate side supports (e.g. to allow the course of the assembled support structure to be varied or to alter the position of, for example, a leg or support baton component to be attached to the structure).

In one embodiment, the platform is a rooftop walkway or a walkway inside a building (e.g. mounted in a void between a suspended ceiling and a roof). In another embodiment, the platform is a step-over structure providing raised access.

In one embodiment, the step of coupling the at least one cross member to the first and second side supports comprises riveting or welding the first and second free ends to the first and second side supports respectively (e.g. riveting or welding the first and second free ends to the first and second flanges respectively). This coupling step may advantageously be carried out on-site (e.g. on a rooftop).

In one embodiment, at least one of the first and second flanges is continuous. In this way, the at least one cross member may be supported anywhere along the length of the first or second flange.

In one embodiment, the first elongate side support further comprises a first upper flange extending from the first inner wall substantially parallel to the first flange (e.g. first lower flange) and spaced therefrom to define a first channel for receiving the first free end of the at least one cross member. In this way, the at least one cross member may be snugly received in the first channel prior to the coupling step. In one embodiment, the coupling step comprises coupling the first free end of the at least one cross member to the first upper flange.

In one embodiment, the first upper flange includes a longitudinally extending rib (or ridge) configured to abut an upper surface of the at least one cross member when received (e.g. substantially fully received) in the first channel. In this way, an accurate fit may be achieved inside the first channel whilst minimising frictional contact during insertion of the first free end of the at least one cross member into the first channel. In one embodiment the longitudinally extending rib is located adjacent (e.g. adjacent but spaced from) the first inner wall.

In one embodiment, the second elongate side support further comprises a second upper flange extending from the second inner wall substantially parallel to the second flange (e.g. second lower flange) and spaced therefrom to define a second channel for receiving the second free end of the at least one cross member. In one embodiment, the coupling step comprises coupling the second free end of the at least one cross member to the second upper flange.

In one embodiment, the second upper flange includes a longitudinally extending rib (or ridge) configured to abut an upper surface of the at least one cross member when received (e.g. substantially fully received) in the second channel. In one embodiment the longitudinally extending rib is located adjacent (e.g. adjacent but spaced from) the second inner wall.

In one embodiment, the method further comprises inserting at least one walkway panel between the first and second elongate side supports (e.g. with the at least one walkway panel being supported by the first and second upper flanges and/or at least one cross member). As will be appreciated, the at least one cross member may be of any width allowing the constructed support structure to support any size of walkway panel. In one embodiment, expansion joints are positioned between adjacent panels to allow for temperature variation.

In one embodiment, at least one of the first and second outer walls comprises a longitudinally extending channel configured to receive a channel nut (e.g. for use in coupling a side rail or leg component to the platform).

In one embodiment, the longitudinally extending channel is an upper channel and the at least one of the first and second outer walls comprises a further lower channel configured to receive a further channel nut (e.g. for coupling a side rail or leg component at a second location spaced from a first location associated with the first-defined longitudinally extending channel).

In one embodiment, the method further comprises coupling a side rail (e.g. handrail or safety rail) to the at least one of the first and second outer walls using at least one channel nut.

In one embodiment, at least one of the first and second bodies has a hollow construction. In one embodiment, the at least one of the first and second bodies comprises at least one internal cross member (e.g. an upper internal cross member extending in the same plane as the upper flange and/or a lower internal cross member extending in the same plane as the lower flange). In one embodiment, the at least one of the first and second bodies further comprises at least one internal upright member (e.g. an upper internal upright member extending between an upper wall of the body and the upper internal cross member and/or a lower internal upright member extending between a lower wall of the body and the lower internal cross member).

In one embodiment, the method further comprises providing a third elongate side support, wherein a lower surface of the third elongate side support and the first upper surface of the first elongate side support have interengageable profiles configured to prevent relative lateral movement therebetween when the third elongate side support is positioned on top of the first elongate side support (e.g. to assist connection of the first and second elongate side support member when, for example, forming a bridge section).

In one embodiment, the third elongate side support comprises a third body having a third upper surface, a third lower surface, a third inner wall and a third outer wall, the third body further defining a third flange extending from the third inner wall along a length of the third side support (e.g. substantially along the length of third side support). The third body may have an identical construction to the first and second bodies.

According to the invention, the method further comprises forming a stepped section. The stepped section is formed using fourth and fifth elongate side supports (e.g. equivalent in structure to the first and second elongate side supports) positioned in an inclined orientation relative to the first and second elongate side supports and connected to one another by at least one cross member (e.g. as previously defined). In one embodiment the at least one cross member is configured to act as a tread or alternatively as a mount for a tread.

The method comprises further connecting the fourth elongate side support to the first elongate side support using a first connector plate and connecting the fifth elongate side support to the second elongate side support using a second connector plate.

The first and second connector plates are each configured to connect respectively the first and the fourth elongate side supports together, and the second and the fifth elongate side supports together in a predetermined inclined orientation (e.g. so that one of the pair is inclined relative to the other). Each of the first and second connector plates defines a first group of connection profiles for orientating with a longitudinally extending channel of one of the first and second elongate side supports and a second group of connection profiles (e.g. inclined relative to the first group of connection profiles) for orientating with a longitudinally extending channel of one of the fourth and fifth elongate side supports. The first and second groups of connection profiles comprise first and second groups of apertures (e.g. for receiving a channel nut).

In the case of elongate side supports comprising an upper channel and a lower channel, the first group of connection profiles may comprise a first upper group of profiles (e.g. first upper group of apertures) for orientating with the upper channel and a first lower group of profiles (e.g. first lower group of apertures) for orientating with the lower channel. The second group of connection profiles may comprise a second upper group of profiles (e.g. second upper group of apertures) for orientating with the upper channel and a second lower group of profiles (e.g. second upper group of apertures) for orientating with the lower channel.

In one embodiment, the first and second connection plates are provided with a plurality of channel nuts pre-installed through the first and second groups of apertures and the method further comprises guiding relative movement of a channel engaging part of the channel nuts along at least one channel provided in each of the pair of elongate side supports (e.g. by moving the connection plate relative to the elongate side support or moving the elongate side support relative to the connection plate).

In one embodiment, at least one of the first and second plates comprises a viewing aperture (e.g. viewing window) for allowing a user to inspect an end position of elongate side supports connected to the plate. In this way, a user can check that each elongate side support is correctly positioned relative to the plate (e.g. before tightening the channel nuts).

In accordance with a second aspect of the present invention, there is provided a kit of parts for constructing a platform for use as a walkway (e.g. rooftop walkway), according to claim 9.

In one embodiment, the at least one cross member is configured to be riveted or welded to the first and second free ends to the first and second side supports respectively (e.g. riveted or welded to the first and second free ends to the first and second flanges respectively). In one embodiment, at least one of the first and second flanges is continuous.

In one embodiment, the first elongate side support further comprises a first upper flange extending from the first inner wall parallel to the first flange (e.g. first lower flange) and spaced therefrom to define a first channel for receiving the first free end of the at least one cross member. In one embodiment, the first free end of the at least one cross member is configured to be riveted or welded to the first upper flange.

In one embodiment, the first upper flange includes a longitudinally extending rib (or ridge) configured to abut an upper surface of the at least one cross member when received (e.g. substantially fully received) in the first channel. In one embodiment the longitudinally extending rib is located adjacent (e.g. adjacent but spaced from) the first inner wall.

In one embodiment, the second elongate side support further comprises a second upper flange extending from the second inner wall parallel to the second flange (e.g. second lower flange) and spaced therefrom to define a second channel for receiving the second free end of the at least one cross member. In one embodiment, the second free end of the at least one cross member is configured to be riveted or welded to the second upper flange.

In one embodiment, the second upper flange includes a longitudinally extending rib (or ridge) configured to abut an upper surface of the at least one cross member when received (e.g. substantially fully received) in the second channel. In one embodiment the longitudinally extending rib is located adjacent (e.g. adjacent but spaced from) the second inner wall.

In one embodiment, the kit of parts further comprises at least one walkway panel configured to be supported by the first and second elongate side supports (e.g. configured to be supported by the first and second upper flanges) and/or supported by the at least one cross member.

In one embodiment, at least one of the first and second outer walls comprises a longitudinally extending channel configured to receive a channel nut.

In one embodiment, the longitudinally extending channel is an upper channel and the at least one of the first and second outer walls comprises a further lower channel configured to receive a further channel nut.

In one embodiment, the kit of parts further comprises a side rail (e.g. to form part of a handrail or safety rail) configured to be coupled to the at least one of the first and second outer walls using at least one channel nut.

In one embodiment, at least one of the first and second bodies has a hollow construction. In one embodiment, the at least one of the first and second bodies comprises at least one internal cross member (e.g. an upper internal cross member extending in the same plane as the upper flange and/or a lower internal cross member extending in the same plane as the lower flange). In one embodiment, the at least one of the first and second bodies further comprises at least one internal upright member (e.g. an upper internal upright member extending between an upper wall of the body and the upper internal cross member and/or a lower internal upright member extending between a lower wall of the body and the lower internal cross member).

In one embodiment, the kit of parts further comprises a third elongate side support for forming a bridge section, wherein a lower surface of the third elongate side support and the first upper surface of the first elongate side support have interengageable profiles configured to prevent relative lateral movement therebetween when the third elongate side support is positioned on top of the first elongate side support.

In one embodiment, the third elongate side support comprises a third body having a third upper surface, a third lower surface, a third inner wall and a third outer wall, the third body further defining a third flange extending from the third inner wall along a length of the third side support (e.g. substantially along the length of third side support)

According to the invention, the kit of parts further comprises parts for forming a stepped section. In one embodiment the parts for forming the stepped section comprise fourth and fifth elongate side supports (e.g. equivalent in structure to the first and second elongate side supports) positioned in an inclined orientation relative to the first and second elongate side supports and connected to one another by at least one cross member (e.g. as previously defined). In one embodiment the at least one cross member is configured to act as a tread or alternatively as a mount for a tread.

The kit of parts further comprises at least one of a first connector plate configured to connect the fourth elongate side support to the first elongate side support and a second connector plate configured to connect the fifth elongate side support to the second elongate side support.

The first and second connector plates are each configured to connect a pair of elongate side supports together in a predetermined inclined orientation (e.g. so that one of the pair is inclined relative to the other). Each of the first and second connector plates defines a first group of connection profiles for orientating with a longitudinally extending channel of a first one of the pair of elongate side supports and a second group of connection profiles (e.g. inclined relative to the first group of connection profiles) for orientating with a longitudinally extending channel of a second one of the pair of elongate side supports.

The first and second groups of connection profiles comprise first and second groups of apertures (e.g. for receiving a channel nut).

In the case of elongate side supports comprising an upper channel and a lower channel, the first group of connection profiles may comprise a first upper group of profiles (e.g. first upper group of apertures) for orientating with the upper channel and a first lower group of profiles (e.g. first lower group of apertures) for orientating with the lower channel. The second group of connection profiles may comprise a second upper group of profiles (e.g. second upper group of apertures) for orientating with the upper channel and a second lower group of profiles (e.g. second upper group of apertures) for orientating with the lower channel.

In one embodiment, the first and second connection plates are provided with a plurality of channel nuts pre-installed through the first and second groups of apertures. In this way, the elongate side supports may be quickly and accurately aligned with the connection plates by guiding relative movement of a channel engaging part of the pre-installed channel nuts along the channels formed in the elongate side supports.

In one embodiment, at least one of the first and second plates comprises a viewing aperture (e.g. viewing window) for allowing a user to inspect an end position of elongate side supports connected to the plate. In this way, a user can check that each elongate side support is correctly positioned relative to the plate (e.g. before tightening the channel nuts).

In accordance with a third aspect of the present invention, there is provided a walkway platform (e.g. rooftop walkway platform) according to claim 12.

In one embodiment, the at least one cross member is coupled to the first and second side supports (e.g. with the first and second free ends of the at least one cross member being coupled to the first and second flanges respectively). For example, the at least one cross member may be riveted or welded to the first and second free ends to the first and second side supports respectively (e.g. with the first and second free end riveted or welded to the first and second flanges respectively).

In one embodiment, at least one of the first and second flanges is continuous.

In one embodiment, the first elongate side support further comprises a first upper flange extending from the first inner wall parallel to the first flange (e.g. first lower flange) and spaced therefrom to define a first channel into which the first free end of the at least one cross member is received. In one embodiment, the first free end of the at least one cross member is coupled (e.g. riveted or welded) to at least one of the first flange and the first upper flange.

In one embodiment, the first upper flange includes a longitudinally extending rib (or ridge) that abuts an upper surface of the at least one cross member (e.g. upper surface of a leading end of the at least one cross member) received in the first channel. In one embodiment the longitudinally extending rib is located adjacent (e.g. adjacent but spaced from) the first inner wall.

In one embodiment, the second elongate side support further comprises a second upper flange extending from the second inner wall parallel to the second flange (e.g. second lower flange) and spaced therefrom to define a second channel into which the second free end of the at least one cross member is received. In one embodiment, the second free end of the at least one cross member is coupled (e.g. riveted or welded) to at least one of the second flange and the second upper flange.

In one embodiment, the second upper flange includes a longitudinally extending rib (or ridge) that abuts an upper surface of the at least one cross member received (e.g. substantially fully received) in the second channel. In one embodiment the longitudinally extending rib is located adjacent (e.g. adjacent but spaced from) the second inner wall.

In one embodiment, the walkway platform further comprises at least one walkway panel supported by the first and second elongate side supports (e.g. supported by the first and second upper flanges) or supported by the at least one cross member.

In one embodiment, at least one of the first and second outer walls comprises a longitudinally extending channel configured to receive a channel nut.

In one embodiment, the longitudinally extending channel is an upper channel and the at least one of the first and second outer walls comprises a further lower channel configured to receive a further channel nut.

In one embodiment, the walkway further comprises a side rail (e.g. handrail or safety rail) coupled to the at least one of the first and second outer walls by at least one channel nut.

In one embodiment, at least one of the first and second bodies has a hollow construction. In one embodiment, the at least one of the first and second bodies comprises at least one internal cross member (e.g. an upper internal cross member extending in the same plane as the upper flange and/or a lower internal cross member extending in the same plane as the lower flange). In one embodiment, the at least one of the first and second bodies further comprises at least one internal upright member (e.g. an upper internal upright member extending between an upper wall of the body and the upper internal cross member and/or a lower internal upright member extending between a lower wall of the body and the lower internal cross member).

In one embodiment, the walkway comprises a bridge section comprising a third elongate side support positioned on top of the first elongate side support, wherein a lower surface of the third elongate side support and the first upper surface of the first elongate side support have interengageable profiles configured to prevent relative lateral movement therebetween when the third elongate side support.

In one embodiment, the third elongate side support comprises a third body having a third upper surface, a third lower surface, a third inner wall and a third outer wall, the third body further defining a third flange extending from the third inner wall along a length of the third side support (e.g. substantially along the length of third side support).

According to the invention, the walkway further comprises a stepped section. The stepped section is formed using fourth and fifth elongate side supports (e.g. equivalent in structure to the first and second elongate side supports) positioned in an inclined orientation relative to the first and second elongate side supports and connected to one another by at least one cross member (e.g. as previously defined). In one embodiment the at least one cross member is configured to act as a tread or alternatively as a mount for a tread.

The walkway platform comprises a first connector plate connecting the fourth elongate side support to the first elongate side support and a second connector plate connecting the fifth elongate side support to the second elongate side support.

The first and second connector plates are each configured to connect a pair of elongate side supports together in a predetermined inclined orientation (e.g. so that one of the pair is inclined relative to the other). Each of the first and second connector plates defines a first group of connection profiles for orientating with a longitudinally extending channel of a first one of the pair of elongate side supports and a second group of connection profiles (e.g. inclined relative to the first group of connection profiles) for orientating with a longitudinally extending channel of a second one of the pair of elongate side supports.

The first and second groups of connection profiles comprise first and second groups of apertures (e.g. for receiving a channel nut).

In the case of elongate side supports comprising an upper channel and a lower channel, the first group of connection profiles may comprise a first upper group of profiles (e.g. first upper group of apertures) for orientating with the upper channel and a first lower group of profiles (e.g. first lower group of apertures) for orientating with the lower channel. The second group of connection profiles may comprise a second upper group of profiles (e.g. second upper group of apertures) for orientating with the upper channel and a second lower group of profiles (e.g. second upper group of apertures) for orientating with the lower channel.

In one embodiment, at least one of the first and second plates comprises a viewing aperture (e.g. viewing window) for allowing a user to inspect an end position of elongate side supports connected to the plate.

Embodiments of the present invention will now be described by way of example with reference to the accompanying drawings in which:
Figure 1 is a schematic view of a part of a rooftop walkway in accordance with an embodiment of the present invention in a fully assembled configuration;
Figure 2 is a schematic view of a support structure forming part of the rooftop walkway of Figure 1;
Figure 3 is a schematic cross-sectional view an elongate side support forming part of the support structure of Figure 2;
Figure 4 is a schematic view of the support structure of Figure 2 when used to support a further support structure;
Figure 5 is a schematic view of a structural connector forming part of the rooftop walkway of Figure 1;
Figure 6 is a schematic end view of the structural connector of Figure 5;
Figure 7 is a schematic end view of an alternative structural connector;
Figure 8 is a schematic view of a step-over walkway in accordance with the present invention in a fully assembled configuration; and
Figures 9A-B show steps in the assembly of the step-over walkway of Figure 8.

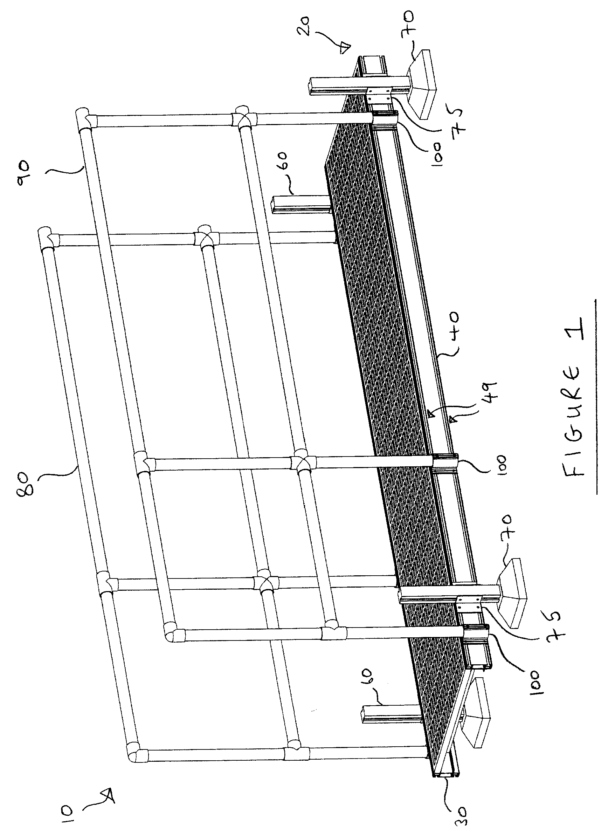

Figure 1 shows a rooftop walkway 10 comprising a raised support structure 20 comprising first and second modular elongate side supports 30, 40 connected by a plurality of cross-members 50. First and second pairs of legs 60, 70 are mounted to first and second elongate side supports 30, 40 respectively by brackets 75. First and second handrails 80, 90 are additionally mounted to the first and second elongate side supports 30, 40 respectively by structural connectors 100.

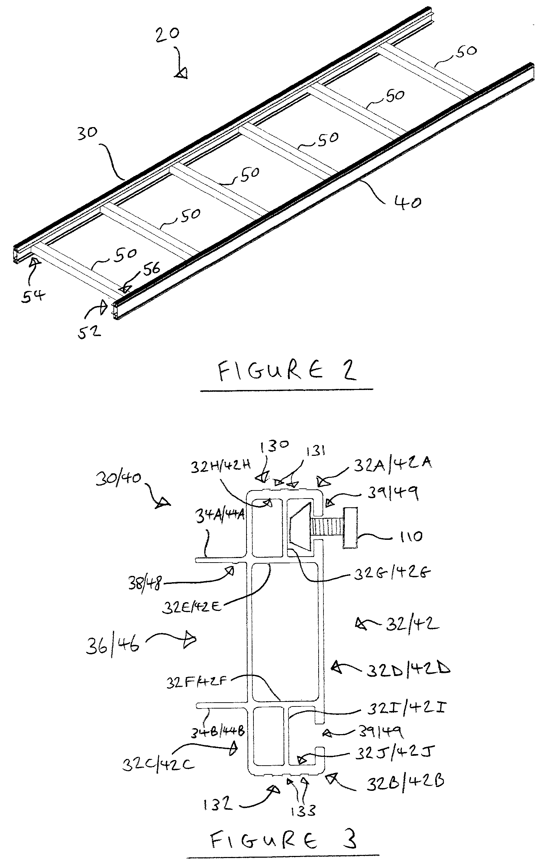

As illustrated in Figures 2 and 3, first elongate side support 30 includes a first body 32 having a first upper surface 32A, a first lower surface 32B, a first inner wall 32C and a first outer wall 32D, the first body 32 further defining first upper and lower continuous flanges 34A, 34B extending from the first inner wall 32C substantially along a length of the first side support 30 to define a first channel 36 into which a first free end 52 of the plurality of cross members 50 is received. Second elongate side support 40 includes a second body 42 having a second upper surface 42A, a second lower surface 42B, a second inner wall 42C and a second outer wall 42D, the second body 42 further defining second upper and lower continuous flanges 44A, 44B extending from the second inner wall 42C substantially along a length of the second side support 40 to define a second channel 46 into which a second free end 54 of the plurality of cross members 50 is received. First and second upper flanges 34A, 44A each includes a longitudinally extending rib (or ridge) 38, 48 close to but spaced from first and second inner walls 32C, 42C and configured to abut an upper surface 56 of the plurality of cross member 50 when fully received in the channels to provide an accurate fit in the channel whilst allowing initial insertion of the first and second free ends 52, 54 of cross members 50 into the channels to occur with no or minimal frictional contact (e.g. with significant frictional contact only occurring once first and second free ends 52, 54 reach the longitudinally extending rib 38, 48.

Each of first and second bodies 32, 42 have a hollow construction comprising an upper internal cross member 32E, 42E extending in the same plane as upper flange 34A, 44A, a lower internal cross member 32F, 42F extending in the same plane as lower flange 34B, 44B, an upper internal upright member 32G, 42G extending between an upper wall 32H, 42H of the body 32, 42 and upper internal cross member 32E, 42E, and a lower internal upright member 32I, 42I extending between a lower wall 32J, 42J of the body 32, 42 and lower internal cross member 32F, 42F. First and second outer walls 32D, 42D also include first and second pairs of longitudinally extending channels 39, 49 respectively each configured to receive threaded channel nuts 110 (i.e. a threaded nut with a channel engaging portion that is movable between a locked position that prevents removal of the channel engaging portion from the channel and an unlocked position that allow removal of the channel engaging portion from the channel). Advantageously, the provision of such channels allows the connection of further components at any location along first and second elongate side supports 30,40.

Raised support structure 20 is constructed (e.g. on-site on a rooftop) by inserting first free ends 52 of cross members 50 into first channel 36 of first elongate side support 30. Second elongate side support 40 may then be positioned so that second free ends 54 of cross members 50 are received in second channel 46. First and second free ends 52, 54 are then coupled (e.g. riveted or welded) to first and second upper flanges 34A, 44A and to first and second lower flanges 34B, 44B to form a rigid structure as shown in Figure 2.

Once support structure 20 is formed, first and second pairs of legs 60, 70 are mounted to first and second elongate side supports 30, 40 respectively using brackets 75. Channel nuts 110 are used to connect brackets 75 to first and second pairs of channels 39, 49 and to connect brackets 75 to corresponding channels provided on legs 60, 70 (with the channels provided on the legs allowing leg height to be set individually for each leg).

First and second handrails 80, 90 are also mounted to the first and second elongate side supports 30, 40 respectively using first and second pairs of channels 39, 39 but this time using structural connectors 100 as discussed in more detail below.

Construction of rooftop walkway 10 is completed by positioning walkway panel 120 (which may be a single panel as illustrated or a plurality of panels spanning the width of the walkway) so that a lower surface thereof is supported by first and second upper flanges 34A, 44A and plurality of cross members 50. Walkway panel 120 may be coupled to support structure 20 using any suitable connection technique.

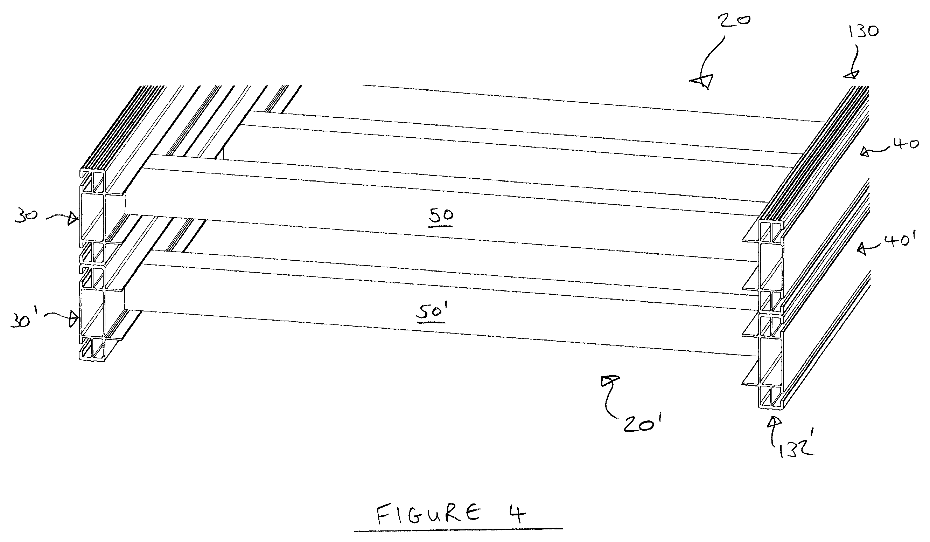

Figure 4 illustrates how support structure 20 may mounted on top of a further support structure 20' of identical structure (features in common with support structure 20 are labelled accordingly in the drawing). As illustrated most clearly in Figure 3, first and second upper surfaces 32A, 42A and first and second lower surfaces 32B, 42B of the first and second elongate side supports 30, 40 have interengageable profiles 130, 132 (created by forming a first series of longitudinally extending channels 131 on one surface and a corresponding but offset series of longitudinally extending channels 133 on the other surface) configured to prevent relative lateral movement therebetween when interengaged. This ability of the modular elongate side supports to nest on top of one another allows support structures 20, 20' to form, for example, a bridge section to span a region of roof by positioning the upper support structure in a longitudinally advanced position relative to the lower support structure.

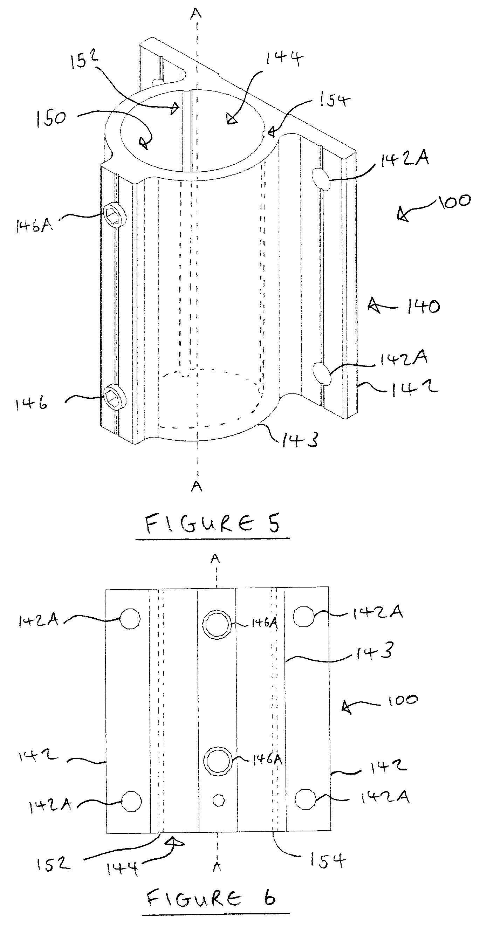

Figures 5 and 6 show structural connector 100 used in the construction of rooftop walkway 10. Structural connector 100 comprises an extrusion-moulded body 140 comprising a bracket part 142 (including apertures 142A for connecting body 140 to first and second elongate side supports 30, 40 respectively using first and second pairs of channels 39, 39/channel nuts 110), and a tubular sleeve part 143 defining a through bore 144 of substantially circular cross-section having a central longitudinal insertion axis "A" for receiving an elongate tubular part 82, 92 of first and second handrails 80, 90. Tubular part 143 further comprise a clamping part 146 for clamping the elongate member to body 140 when the elongate tubular part 82, 92 is located in bore 144, clamping part 146 comprising a pair of longitudinally spaced clamping screws 146A each in screw-threaded engagement with a respective screw-threaded aperture extending from an outer surface of the body and through the body to an inner surface 150 of the bore.

Inner surface 150 of bore 144 defines first and second parallel elongate ribs (or ridges) 152, 154 each extending longitudinally along the entire length of inner surface 150, wherein clamping part 146, first elongate rib 152 and second elongate rib 154 are substantially equally spaced circumferentially relative to the central longitudinal axis "A" so that the clamping action of the clamping part urges elongate tubular part 82, 92 against first and second elongate ribs 152, 154. In this way, structural connector 100 is provided with a 3-point contact profile that allows accurate positioning of elongate tubular part 82, 92 parallel to the central longitudinal axis "A" with the first and second elongate ribs 152, 154 providing low frictional resistance during insertion of the elongate tubular parts into the bore.

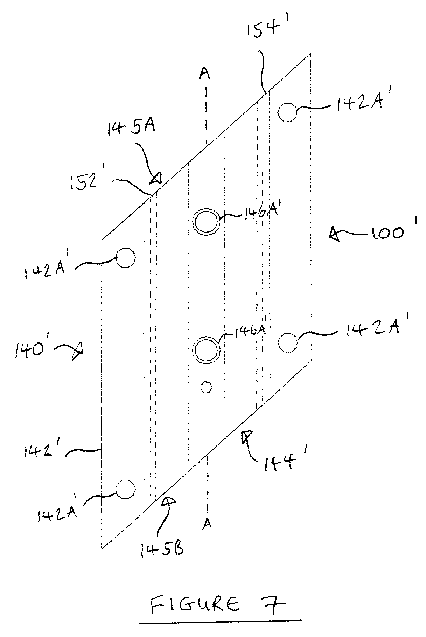

Figure 7 shows an alternative structural connector 100' based on structural connector 100 (with corresponding parts labelled accordingly) comprising a through bore 144' defining leading and trailing openings 145A, 145B inclined relative to the central longitudinal axis "A" to form a connector for mount elongate tubular parts 82, 92 at a precise predefined inclined angle (e.g. acute angle) relative to the central longitudinal axis "A" (as may be required when forming a walkway with a stepped section). Since body 140' is extrusion-moulded, a plurality of structural connectors 100' may be formed by cutting angled sections from a continuous extrusion (i.e. with minimum wastage and without the need for more than one mould).

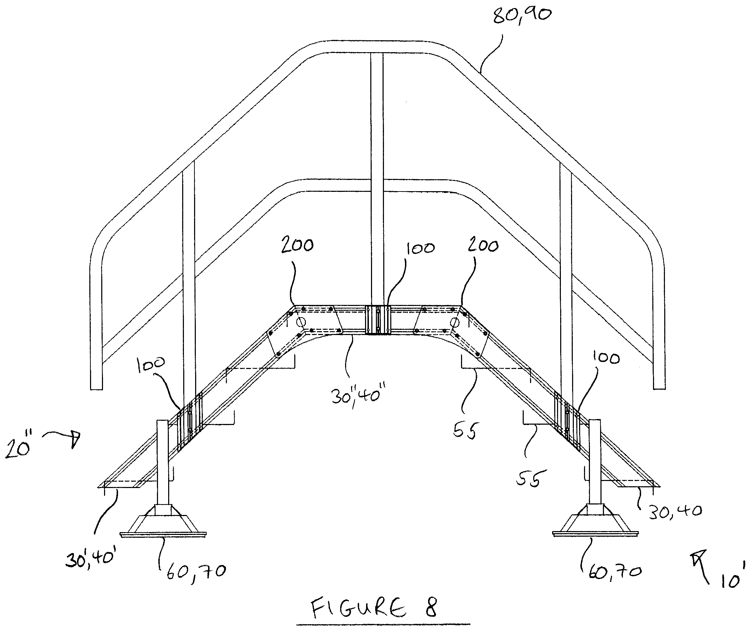

Figure 8 shows a step-over walkway 10' (or "step over") based on the modular construction of rooftop walkway 10 and comprising a raised support structure 20" mounted on legs 60, 70 comprising first and second modular elongate side supports 30, 40, third and fourth modular elongate side supports 30', 40', and fifth and sixth modular elongate side supports 30", 40". Each pair of module elongate side supports is connected by a plurality of cross-members 50 connected between first and second upper flanges 34A, 44A and to first and second lower flanges 34B, 44B as before and supporting steps 55 (for simplicity not all features are shown in the drawing but reference can be made to the views of alternative modular structure 10 for details of modular components). First and second handrails 80, 90 are also mounted to the first and second elongate side supports using structural connectors 100.

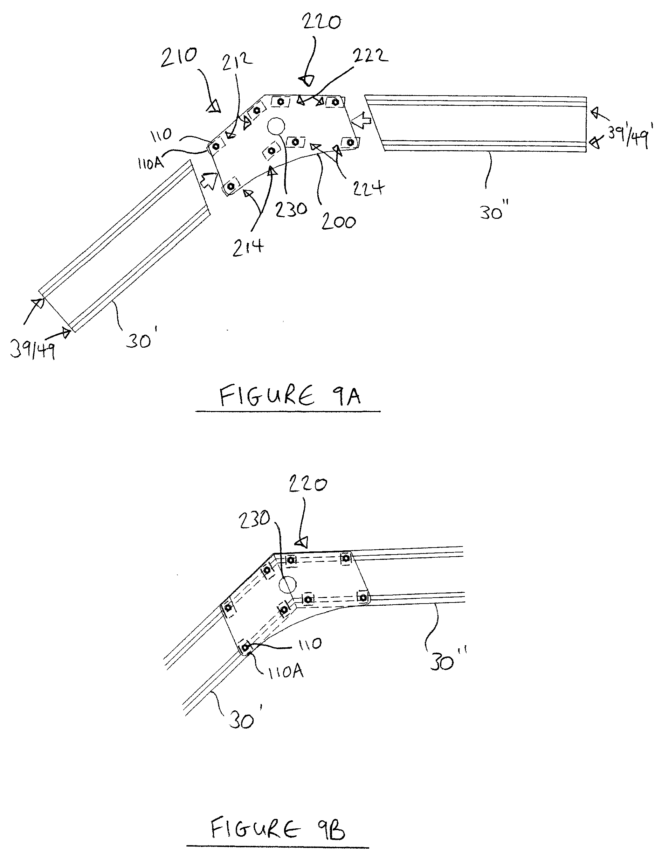

Each modular side support is connected to an adjacent modular side support by means of a connection plates 200 configured to connect a pair of elongate side supports together in a predetermined inclined orientation. As shown in Figure 9A, connection plate 200 comprises defines: a first group of connection profiles 210 comprising a first upper pair of apertures 212 for orientating with an upper longitudinally extending channel 39/49 of a first modular side support and a first lower pair of apertures 214 for orientating with a lower longitudinally extending channel 39/49 of the first modular side support; and a second group of connection profiles 220 inclined relative to the first group of connection profiles 210 and comprising a second upper pair of apertures 222 for orientating with an upper longitudinally extending channel of a second modular side support and a second lower pair of apertures 224 for orientating with a lower longitudinally extending channel 39'/49' of the second modular side support. a first one of the pair of elongate side supports and a second group of apertures for orientating with a longitudinally extending channel 39'/49' of a second one of the pair of elongate side supports. Channel nuts 110 are used to fix each modular side support in place once orientated in the correct position.

As illustrated in Figure 9A-9B connection of the adjacent modular side supports to connection plate 200 may be achieved with channel nuts 110 prepositioned through apertures 212, 214 and 222, 224 allowing an end of each modular side support to be slid over a channel engaging part 110A of channel nuts 110 (when in the unlocked position relative to the channel) and into position relative to the connection plate. A viewing window 230 extending through plate 200 allows a user to check the positioning of an end of both modular side supports relative to the plate 200 thereby allowing quick and accurate alignment. In practice, a range of preformed connection plates may be provided to allow for different connection angles (e.g. to suit different types of stepped structure).

## Claims

1. A method of constructing a platform (20") for use as a walkway comprising:
providing a first elongate side support (30) comprising a first body (32) having a first upper surface (32A), a first lower surface (32B), a first inner wall (32C) and a first outer wall (32D), the first body (32) further defining a first flange (34B) extending from the first inner wall (32C) along a length of the first elongate side support (30);
supporting a first free end (52) of at least one cross member (50) on the first flange (34B) of the first elongate side support (30);
providing a second elongate side support (40) comprising a second body (42) having a second upper surface (42A), a second lower surface (42B), a second inner wall (42C) and a second outer wall (42D), the second body (42) further defining a second flange (44B) extending from the second inner wall (42C) along a length of the second side support (40);
supporting on the second flange (44B) of the second elongate side support (40) a second free end (54) of the at least one cross member (50) opposed to the first free end (52); and
coupling the at least one cross member (50) to the first and second side supports (30,40);
**characterised in that** the method further comprises forming a stepped section using fourth and fifth elongate side supports (30',40') positioned in an inclined orientation relative to the first and second elongate side supports (30,40) and connected to one another by at least one cross member (50), wherein the method comprises further connecting the fourth elongate side support (30') to the first elongate side support (30) using a first connector plate (200) and connecting the fifth elongate side support (40') to the second elongate side support (40) using a second connector plate (200);
wherein the first and second connector plates (200) are each configured to connect respectively the first and the fourth elongate side supports together, and the second and the fifth elongated side supports together in a predetermined inclined orientation and each of the first and second connector plates (200) defines a first group of apertures (210) for orientating with a longitudinally extending channel (39,49) of one of the first and second elongate side supports (30, 40) and a second group of apertures (220) for orientating with a longitudinally extending channel (39',49') of one of the fourth and fifth elongate side supports (30', 40').

2. A method according to claim 1, wherein the step of coupling the at least one cross member (50) to the first and second side supports (30,40) comprises coupling the first and second free ends (52,54) to the first and second side supports (30,40) respectively.

3. A method according to claim 1 or claim 2, wherein the first elongate side support (30) further comprises a first upper flange (34A) extending from the first inner wall (32C) substantially parallel to the first flange (34B) and spaced therefrom to define a first channel (36) for receiving the first free end (52) of the at least one cross member (50).

4. A method according to claim 3, wherein the first upper flange (34A) includes a longitudinally extending rib (38) configured to abut an upper surface (56) of the at least one cross member (50) when received in the first channel (36).

5. A method according to any of the preceding claims, wherein at least one of the first and second outer walls (32D,42D) comprises a longitudinally extending channel (39,49) configured to receive a channel nut (110).

6. A method according to any of the preceding claims, the method further comprising providing a third elongate side support, wherein a lower surface of the third elongate side support and the first upper surface (32A) of the first elongate side support (30) have interengageable profiles configured to prevent relative lateral movement therebetween when the third elongate side support is positioned on top of the first elongate side support (30).

7. A method according to any preceding claim, wherein the first and second connector plates (200) are provided with a plurality of channel nuts (110) pre-installed through the first and second groups of apertures (210,220) and the method further comprises guiding relative movement of a channel engaging part (110A) of the channel nuts (110) along at least one channel (39,49) provided in each of the pair of elongate side supports.

8. A method according to any preceding claim, wherein at least one of the first and second plates (200) comprises a viewing aperture (230) for allowing a user to inspect an end position of elongate side supports connected to the plate (200).

9. A kit of parts for constructing a platform (20") for use as a walkway, comprising:
a first elongate side support (30) comprising a first body (32) having a first upper surface (32A), a first lower surface (32B), a first inner wall (32C) and a first outer wall (32D), the first body (32) further defining a first flange (34B) extending from the first inner wall (32C) along a length of the first side support (30);
a second elongate side support (40) comprising a second body (42) having a second upper surface (42A), a second lower surface (42B), a second inner wall (42C) and a second outer wall (42D), the second body (42) further defining a second flange (44B) extending from the second inner wall (42C) along a length of the second side support (40); and
at least one cross member (50) having a first free end (52) configured to be supported by the first flange (34B) and a second free end (54) opposed to the first free end (52) configured to be supported by the second flange (44B);
**characterised in that** the kit of parts comprises parts for forming a stepped section including fourth and fifth elongate side supports (30',40') for positioning in an inclined orientation relative to the first and second elongate side supports (30,40) and another cross member (50) for connecting to one another said fourth and fifth elongated side supports (30', 40'), the kit of parts further comprising a first connector plate (200) configured to connect the fourth elongate side support (30') to the first elongate side support (30) and a second connector plate (200) configured to connect the fifth elongate side support (40') to the second elongate side support (40);
wherein the first and second connector plates (200) are each configured to connect respectively the first and the fourth elongate side supports together, and the second and the fifth elongate side supports together in a predetermined inclined orientation and each of the first and second connector plates (200) defines a first group of apertures (210) for orientating with a longitudinally extending channel (39,49) of one of the first and second elongate side supports (30, 40) and a second group of apertures (220) for orientating with a longitudinally extending channel (39',49') of one of the fourth and fifth elongate side supports (30', 40').

10. A kit of parts according to claim 9, wherein the first and second connector plates (200) are provided with a plurality of channel nuts (110) pre-installed through the first and second groups of apertures (210,220).

11. A kit of parts according to claim 9 or claim 10, wherein at least one of the first and second plates (200) comprises a viewing aperture (230) for allowing a user to inspect an end position of elongate side supports connected to the plate (200).

12. A walkway platform (20") comprising:
a first elongate side support (30) comprising a first body (32) having a first upper surface (32A), a first lower surface (32B), a first inner wall (32C) and a first outer wall (32D), the first body (32) further defining a first flange (34B) extending from the first inner wall (32C) along a length of the first side support (30);
a second elongate side support (40) comprising a second body (42) having a second upper surface (42A), a second lower surface (42B), a second inner wall (42C) and a second outer wall (42D), the second body (42) further defining a second flange (44B) extending from the second inner wall (42C) along a length of the second side support (40); and
at least one cross member (50) having a first free end (52) supported by the first flange (34B) and a second free end (54) opposed to the first free end (52) supported by the second flange (44B);
**characterised in that** the walkway platform (20") comprises a stepped section formed using fourth and fifth elongate side supports (30'40') positioned in an inclined orientation relative to the first and second elongate side supports (30,40) and connected to one another by at least one cross member (50), wherein the walkway platform (20") comprises a first connector plate (200) connecting the fourth elongate side support (30') to the first elongate side support (30) and a second connector plate (200) connecting the fifth elongate side support (40') to the second elongate side support (40);
wherein the first and second connector plates (200) are each configured to connect respectively the first and the fourth elongate side supports together, and the second and the fifth elongate side supports together in a predetermined inclined orientation and each of the first and second connector plates (200) defines a first group of apertures (210) for orientating with a longitudinally extending channel (39,49) of one of the first and second elongate side supports (30, 40) and a second group of apertures (220) for orientating with a longitudinally extending channel (39',49') of one of the fourth and fifth elongate side supports (30', 40').

13. A walkway platform (20") according to claim 12, wherein at least one of the first and second plates (200) comprises a viewing aperture (230) for allowing a user to inspect an end position of elongate side supports connected to the plate (200).

## Patentansprüche

1. Verfahren zum Konstruieren einer Plattform (20'') zur Verwendung als Gehweg, das Folgendes beinhaltet:
Bereitstellen eines ersten länglichen Seitenträgers (30), der einen ersten Körper (32) mit einer ersten Oberseite (32A), einer ersten Unterseite (32B), einer ersten Innenwand (32C) und einer ersten Außenwand (32D) umfasst, wobei der erste Körper (32) ferner einen ersten Flansch (34B) definiert, der von der ersten Innenwand (32C) entlang einer Länge des ersten länglichen Seitenträgers (30) verläuft;
Abstützen eines ersten freien Endes (52) von wenigstens einem Querelement (50) auf dem ersten Flansch (34B) des ersten länglichen Seitenträgers (30);
Bereitstellen eines zweiten länglichen Seitenträgers (40), der einen zweiten Körper (42) mit einer zweiten Oberseite (42A), einer zweiten Unterseite (42B), einer zweiten Innenwand (42C) und einer zweiten Außenwand (42D) umfasst, wobei der zweite Körper (42) ferner einen zweiten Flansch (44B) definiert, der von der zweiten Innenwand (42C) entlang einer Länge des zweiten Seitenträgers (40) verläuft;
Abstützen, auf dem zweiten Flansch (44B) des zweiten länglichen Seitenträgers (40), eines zweiten freien Endes (54) des wenigstens einen Querelements (50) gegenüber dem ersten freien Ende (52); und
Koppeln des wenigstens einen Querelements (50) mit dem ersten und dem zweiten Seitenträger (30, 40);
**dadurch gekennzeichnet, dass** das Verfahren ferner Folgendes beinhaltet:
Bilden eines gestuften Abschnitts mit einem vierten und einem fünften länglichen Seitenträger (30', 40'), die in einer geneigten Ausrichtung relativ zu dem ersten und dem zweiten länglichen Seitenträger (30, 40) positioniert und durch wenigstens ein Querelement (50) miteinander verbunden sind, wobei das Verfahren ferner das Verbinden des vierten länglichen Seitenträgers (30') mit dem ersten länglichen Seitenträger (30) mittels einer ersten Verbinderplatte (200) und das Verbinden des fünften länglichen Seitenträgers (40') mit dem zweiten länglichen Seitenträger (40) mittels einer zweiten Verbinderplatte (200) beinhaltet;
wobei die erste und die zweite Verbinderplatte (200) jeweils zum jeweiligen Verbinden des ersten und des vierten länglichen Seitenträgers miteinander und des zweiten und des fünften länglichen Seitenträgers miteinander in einer vorbestimmten geneigten Ausrichtung konfiguriert sind und jede der ersten und der zweiten Verbinderplatte (200) eine erste Gruppe von Öffnungen (210) zum Ausrichten mit einem longitudinal verlaufenden Kanal (39, 49) des ersten oder des zweiten länglichen Seitenträgers (30, 40) und eine zweite Gruppe von Öffnungen (220) zum Ausrichten mit einem longitudinal verlaufenden Kanal (39', 49') des vierten oder des fünften länglichen Seitenträgers (30', 40') definiert.

2. Verfahren nach Anspruch 1, wobei der Schritt des Koppelns des wenigstens einen Querelements (50) mit dem ersten und dem zweiten Seitenträger (30, 40) das Koppeln des ersten und des zweiten freien Endes (52, 54) mit dem ersten bzw. dem zweiten Seitenträger (30, 40) beinhaltet.

3. Verfahren nach Anspruch 1 oder Anspruch 2, wobei der erste längliche Seitenträger (30) ferner einen ersten oberen Flansch (34A) umfasst, der von der ersten Innenwand (32C) im Wesentlichen parallel zum ersten Flansch (34B) und in einem Abstand davon verläuft, um einen ersten Kanal (36) zum Aufnehmen des ersten freien Endes (52) des wenigstens einen Querelements (50) zu definieren.

4. Verfahren nach Anspruch 3, wobei der erste obere Flansch (34A) eine longitudinal verlaufende Rippe (38) aufweist, die so konfiguriert ist, dass sie an eine Oberseite (56) des wenigstens einen Querelements (50) anstößt, wenn sie im ersten Kanal (36) aufgenommen wird.

5. Verfahren nach einem der vorherigen Ansprüche, wobei die erste und/oder die zweite Außenwand (32D, 42D) einen longitudinal verlaufenden Kanal (39, 49) umfasst/umfassen, der zum Aufnehmen einer Kanalmutter (110) konfiguriert ist.

6. Verfahren nach einem der vorherigen Ansprüche, wobei das Verfahren ferner das Bereitstellen eines dritten länglichen Seitenträgers beinhaltet, wobei eine Unterseite des dritten länglichen Seitenträgers und die erste Oberseite (32A) des ersten länglichen Seitenträgers (30) ineinandergreifbare Profile aufweisen, konfiguriert zum Verhindern einer relativen lateralen Bewegung dazwischen, wenn der dritte längliche Seitenträger auf dem ersten länglichen Seitenträger (30) positioniert ist.

7. Verfahren nach einem vorherigen Anspruch, wobei die erste und die zweite Verbinderplatte (200) mit mehreren Kanalmuttern (110) versehen sind, die durch die erste und die zweite Gruppe von Öffnungen (210, 200) vorinstalliert sind, und das Verfahren ferner das Führen einer relativen Bewegung eines Kanaleingriffsteils (110A) der Kanalmuttern (110) entlang wenigstens einem Kanal (39, 49) beinhaltet, der in jedem der beiden länglichen Seitenträger vorgesehen ist.

8. Verfahren nach einem vorherigen Anspruch, wobei die erste und/oder die zweite Platte (200) eine Sichtöffnung (230) aufweist/aufweisen, durch die ein Benutzer eine Endposition von mit der Platte (200) verbundenen länglichen Seitenträgern inspizieren kann.

9. Kit von Teilen zum Konstruieren einer Plattform (20'') zur Verwendung als Gehweg, der Folgendes umfasst:
einen ersten länglichen Seitenträger (30), der einen ersten Körper (32) mit einer ersten Oberseite (32A), einer ersten Unterseite (32B), einer ersten Innenwand (32C) und einer ersten Außenwand (32D) umfasst, wobei der erste Körper (32) ferner einen ersten Flansch (34B) definiert, der von der ersten Innenwand (32C) entlang einer Länge des ersten Seitenträgers (30) verläuft;
einen zweiten länglichen Seitenträger (40), der einen zweiten Körper (42) mit einer zweiten Oberseite (42A), einer zweiten Unterseite (42B), einer zweiten Innenwand (42C) und einer zweiten Außenwand (42D) umfasst, wobei der zweite Körper (42) ferner einen zweiten Flansch (44B) definiert, der von der zweiten Innenwand (42C) entlang einer Länge des zweiten Seitenträgers (40) verläuft; und
wenigstens ein Querelement (50) mit einem ersten freien Ende (52), so konfiguriert, dass es vom ersten Flansch (34B) getragen wird, und einem zweiten freien Ende (54) gegenüber dem ersten freien Ende (52), so konfiguriert, dass es von dem zweiten Flansch (44B) getragen wird;
**dadurch gekennzeichnet, dass**
der Kit von Teilen Teile zum Bilden eines gestuften Abschnitts mit einem vierten und einem fünften länglichen Seitenträger (30', 40') zum Positionieren in einer geneigten Ausrichtung relativ zu dem ersten und dem zweiten länglichen Seitenträger (30, 40) und ein anderes Querelement (50) zum Verbinden des genannten vierten und fünften länglichen Seitenträgers (30', 40') miteinander umfasst,
wobei der Kit von Teilen ferner eine erste Verbinderplatte (200), konfiguriert zum Verbinden des vierten länglichen Seitenträgers (30') mit dem ersten länglichen Seitenträger (30), und eine zweite Verbinderplatte (200) umfasst, konfiguriert zum Verbinden des fünften länglichen Seitenträgers (40') mit dem zweiten länglichen Seitenträger (40);
wobei die erste und die zweite Verbinderplatte (200) zum jeweiligen Verbinden jeweils des ersten und des vierten länglichen Seitenträgers miteinander und des zweiten und des fünften länglichen Seitenträgers miteinander in einer vorbestimmten geneigten Ausrichtung konfiguriert sind und jede der ersten und zweiten Verbinderplatten (200) eine erste Gruppe von Öffnungen (210) zum Ausrichten mit einem longitudinal verlaufenden Kanal (39, 49) des ersten oder des zweiten länglichen Seitenträgers (30, 40) und eine zweite Gruppe von Öffnungen (220) zum Ausrichten mit einem longitudinal verlaufenden Kanal (39', 49') des vierten oder des fünften länglichen Seitenträgers (30', 40') definiert.

10. Kit von Teilen nach Anspruch 9, wobei die erste und die zweite Verbinderplatte (200) mit mehreren Kanalmuttern (110) versehen sind, die durch die erste und die zweite Gruppe von Öffnungen (210, 220) vorinstalliert sind.

11. Kit von Teilen nach Anspruch 9 oder Anspruch 10, wobei die erste und/oder zweite Platte (200) eine Sichtöffnung (230) aufweist, durch die ein Benutzer eine Endposition von mit der Platte (200) verbundenen länglichen Seitenträgern inspizieren kann.

12. Gehwegplattform (20''), die Folgendes umfasst:
einen ersten länglichen Seitenträger (30), der einen ersten Körper (32) mit einer ersten Oberseite (32A), einer ersten Unterseite (32B), einer ersten Innenwand (32C) und einer ersten Außenwand (32D) umfasst, wobei der erste Körper (32) ferner einen ersten Flansch (34B) definiert, der von der ersten Innenwand (32C) entlang einer Länge des ersten Seitenträgers (30) verläuft;
einen zweiten länglichen Seitenträger (40), der einen zweiten Körper (42) mit einer zweiten Oberseite (42A), einer zweiten Unterseite (42B), einer zweiten Innenwand (42C) und einer zweiten Außenwand (42D) umfasst, wobei der zweite Körper (42) ferner einen zweiten Flansch (44B) definiert, der von der zweiten Innenwand (42C) entlang einer Länge des zweiten Seitenträgers (40) verläuft; und
wenigstens ein Querelement (50) mit einem ersten freien Ende (52), das von dem ersten Flansch (34B) getragen wird, und einem zweiten freien Ende (54) gegenüber dem ersten freien Ende (52), das von dem zweiten Flansch (44B) getragen wird;
**dadurch gekennzeichnet, dass** die Gehwegplattform (20'') einen gestuften Abschnitt umfasst, der mit einem vierten und einem fünften länglichen Seitenträger (30', 40') gebildet ist, die in einer geneigten Ausrichtung relativ zu dem ersten und dem zweiten länglichen Seitenträger (30, 40) positioniert und durch wenigstens ein Querelement (50) miteinander verbunden sind, wobei die Gehwegplattform (20'') eine erste Verbinderplatte (200), die den vierten länglichen Seitenträger (30') mit dem ersten länglichen Seitenträger (30) verbindet, und eine zweite Verbinderplatte (200) umfasst, die den fünften länglichen Seitenträger (40') mit dem zweiten länglichen Seitenträger (40) verbindet;
wobei die erste und die zweite Verbinderplatte (200) jeweils zum jeweiligen Verbinden des ersten und des vierten länglichen Seitenträgers miteinander und des zweiten und des fünften länglichen Seitenträgers miteinander in einer vorbestimmten geneigten Ausrichtung konfiguriert sind, und jede der ersten und zweiten Verbinderplatten (200) eine erste Gruppe von Öffnungen (210) zum Ausrichten mit einem longitudinal verlaufenden Kanal (39, 49) des ersten oder des zweiten länglichen Seitenträgers (30, 40) und eine zweite Gruppe von Öffnungen (220) zum Ausrichten mit einem longitudinal verlaufenden Kanal (39', 49') des vierten oder des fünften länglichen Seitenträgers (30', 40') definiert.

13. Gehwegplattform (20'') nach Anspruch 12, wobei die erste und/oder zweite Platte (200) eine Sichtöffnung (230) umfasst/umfassen, durch die ein Benutzer eine Endposition von mit der Platte (200) verbundenen länglichen Seitenträgern inspizieren kann.

## Revendications

1. Procédé de construction d'une plate-forme (20'') destinée à être utilisée en tant que passerelle, comprenant les opérations consistant à :
mettre à disposition un premier support latéral allongé (30) comprenant un premier corps (32) ayant une première surface supérieure (32A), une première surface inférieure (32B), une première paroi interne (32C) et une première paroi externe (32D), le premier corps (32) définissant en outre une première bride (34B) laquelle s'étend à partir de la première paroi interne (32C) le long d'une longueur du premier support latéral allongé (30) ;
faire appuyer une première extrémité libre (52) d'au moins un élément transversal (50) sur la première bride (34B) du premier support latéral allongé (30) ;
mettre à disposition un deuxième support latéral allongé (40) comprenant un deuxième corps (42) ayant une deuxième surface supérieure (42A), une deuxième surface inférieure (42B), une deuxième paroi interne (42C) et une deuxième paroi externe (42D), le deuxième corps (42) définissant en outre une deuxième bride (44B) laquelle s'étend à partir de la deuxième paroi interne (42C) le long d'une longueur du deuxième support latéral (40) ;
faire appuyer, sur la deuxième bride (44B) du deuxième support latéral allongé (40), une deuxième extrémité libre (54) dudit au moins un élément transversal (50) à l'opposé de la première extrémité libre (52) ; et
coupler ledit au moins un élément transversal (50) aux premier et deuxième supports latéraux (30, 40) ;
**caractérisé en ce que** le procédé comprend en outre l'opération consistant à former une section en gradins grâce à l'utilisation des quatrième et cinquième supports latéraux allongés (30',40') positionnés suivant une orientation inclinée relativement aux premier et deuxième supports latéraux allongés (30, 40) et raccordés les uns aux autres par au moins un élément transversal (50), cas dans lequel le procédé comprend l'opération consistant à raccorder en outre le quatrième support latéral allongé (30') au premier support latéral allongé (30) grâce à l'utilisation d'une première plaque de raccordement (200) et à raccorder le cinquième support latéral allongé (40') au deuxième support latéral allongé (40) grâce à l'utilisation d'une deuxième plaque de raccordement (200) ;
cas dans lequel les première et deuxième plaques de raccordement (200) sont chacune configurées de façon à raccorder respectivement le premier et le quatrième supports latéraux allongés ensemble, et le deuxième et le cinquième supports latéraux allongés ensemble suivant une orientation inclinée prédéterminée, et chacune des première et deuxième plaques de raccordement (200) définissant un premier groupe d'ouvertures (210) pour une orientation avec un chenal s'étendant longitudinalement (39, 49) de l'un des supports latéraux allongés, soit le premier soit le deuxième (30, 40), et un deuxième groupe d'ouvertures (220) pour une orientation avec un chenal s'étendant longitudinalement (39', 49') de l'un des supports latéraux allongés, soit le quatrième soit le cinquième (30', 40').

2. Procédé selon la revendication 1, l'étape de couplage dudit au moins un élément transversal (50) aux premier et deuxième supports latéraux (30, 40) comprenant le couplage des première et deuxième extrémités libres (52, 54) aux premier et deuxième supports latéraux (30, 40) respectivement.

3. Procédé selon la revendication 1 ou la revendication 2, le premier support latéral allongé (30) comprenant en outre une première bride supérieure (34A) laquelle s'étend à partir de la première paroi interne (32C) sensiblement en parallèle à la première bride (34B) et espacée de celle-ci afin de définir un premier chenal (36) pour recevoir la première extrémité libre (52) dudit au moins un élément transversal (50).

4. Procédé selon la revendication 3, la première bride supérieure (34A) incluant une nervure s'étendant longitudinalement (38) configurée de façon à être en about avec une surface supérieure (56) dudit au moins un élément transversal (50) quand elle est reçue dans le premier chenal (36).

5. Procédé selon l'une quelconque des revendications précédentes, au moins une des parois externes, soit la première soit la deuxième (32D, 42D), comprenant un chenal s'étendant longitudinalement (39, 49) configuré de façon à recevoir un écrou de chenal (110).

6. Procédé selon l'une quelconque des revendications précédentes, le procédé comprenant en outre la mise à disposition d'un troisième support latéral allongé, cas dans lequel une surface inférieure du troisième support latéral allongé et la première surface supérieure (32A) du premier support latéral allongé (30) possèdent des profils aptes à se solidariser mutuellement configurés de façon à empêcher un mouvement latéral relatif entre eux lorsque le troisième support latéral allongé est positionné sur le haut du premier support latéral allongé (30).

7. Procédé selon l'une quelconque des revendications précédentes, les première et deuxième plaques de raccordement (200) étant dotées d'une pluralité d'écrous de chenal (110) lesquels sont pré-installés à travers les premier et deuxième groupes d'ouvertures (210, 220), et le procédé comprenant en outre le guidage d'un mouvement relatif d'une partie de solidarisation de chenal (110A) des écrous de chenal (110) le long d'au moins un chenal (39, 49) prévu dans chaque support parmi la paire de supports latéraux allongés.

8. Procédé selon l'une quelconque des revendications précédentes, au moins une plaque, soit la première soit la deuxième (200), comprenant une ouverture de visualisation (230) pour permettre à un utilisateur d'inspecter une position d'extrémité des supports latéraux allongés raccordés à la plaque (200).

9. Kit de pièces pour construire une plate-forme (20'') destinée à être utilisée en tant que passerelle, comprenant :
un premier support latéral allongé (30) comprenant un premier corps (32) ayant une première surface supérieure (32A), une première surface inférieure (32B), une première paroi interne (32C) et une première paroi externe (32D), le premier corps (32) définissant en outre une première bride (34B) laquelle s'étend à partir de la première paroi interne (32C) le long d'une longueur du premier support latéral allongé (30) ;
un deuxième support latéral allongé (40) comprenant un deuxième corps (42) ayant une deuxième surface supérieure (42A), une deuxième surface inférieure (42B), une deuxième paroi interne (42C) et une deuxième paroi externe (42D), le deuxième corps (42) définissant en outre une deuxième bride (44B) laquelle s'étend à partir de la deuxième paroi interne (42C) le long d'une longueur du deuxième support latéral (40) ; et
au moins un élément transversal (50) possédant une première extrémité libre (52) configurée de façon à être soutenue par la première bride (34B) et une deuxième extrémité libre (54), à l'opposé de la première extrémité libre (52), configurée de façon à être soutenue par la deuxième bride (44B) ;
**caractérisé en ce que** le kit de pièces comprend des pièces pour former une section à gradins incluant des quatrième et cinquième supports latéraux allongés (30', 40') en vue d'un positionnement suivant une orientation inclinée relativement aux premier et deuxième supports latéraux allongés (30, 40) et un autre élément transversal (50) pour raccorder les uns aux autres lesdits quatrième et cinquième supports latéraux allongés (30', 40'), le kit de pièces comprenant en outre une première plaque de raccordement (200) configurée de façon à raccorder le quatrième support latéral allongé (30') au premier support latéral allongé (30) et une deuxième plaque de raccordement (200) configurée de façon à raccorder le cinquième support latéral allongé (40') au deuxième support latéral allongé (40) ;
cas dans lequel les première et deuxième plaques de raccordement (200) sont chacune configurées de façon à raccorder respectivement le premier et le quatrième supports latéraux allongés ensemble, et le deuxième et le cinquième supports latéraux allongés ensemble suivant une orientation inclinée prédéterminée, et chacune des première et deuxième plaques de raccordement (200) définissant un premier groupe d'ouvertures (210) pour une orientation avec un chenal s'étendant longitudinalement (39, 49) de l'un des supports latéraux allongés, soit le premier soit le deuxième (30, 40), et un deuxième groupe d'ouvertures (220) pour une orientation avec un chenal s'étendant longitudinalement (39', 49') de l'un des supports latéraux allongés, soit le quatrième soit le cinquième (30', 40').

10. Kit de pièces selon la revendication 9, les première et deuxième plaques de raccordement (200) étant dotées d'une pluralité d'écrous de chenal (110) lesquels sont pré-installés à travers les premier et deuxième groupes d'ouvertures (210, 220).

11. Kit de pièces selon la revendication 9 ou la revendication 10, au moins une plaque, soit la première soit la deuxième (200), comprenant une ouverture de visualisation (230) pour permettre à un utilisateur d'inspecter une position d'extrémité des supports latéraux allongés raccordés à la plaque (200).

12. Plate-forme à passerelle (20'') comprenant :
un premier support latéral allongé (30) comprenant un premier corps (32) ayant une première surface supérieure (32A), une première surface inférieure (32B), une première paroi interne (32C) et une première paroi externe (32D), le premier corps (32) définissant en outre une première bride (34B) laquelle s'étend à partir de la première paroi interne (32C) le long d'une longueur du premier support latéral allongé (30) ;
un deuxième support latéral allongé (40) comprenant un deuxième corps (42) ayant une deuxième surface supérieure (42A), une deuxième surface inférieure (42B), une deuxième paroi interne (42C) et une deuxième paroi externe (42D), le deuxième corps (42) définissant en outre une deuxième bride (44B) laquelle s'étend à partir de la deuxième paroi interne (42C) le long d'une longueur du deuxième support latéral (40) ; et
au moins un élément transversal (50) possédant une première extrémité libre (52) soutenue par la première bride (34B) et une deuxième extrémité libre (54), à l'opposé de la première extrémité libre (52), soutenue par la deuxième bride (44B) ;
**caractérisée en ce que** la plate-forme à passerelle (20'') comprend une section à gradins formée grâce à l'utilisation de quatrième et cinquième supports latéraux allongés (30', 40') positionnés suivant une orientation inclinée relativement aux premier et deuxième supports latéraux allongés (30, 40) et raccordés les uns aux autres par au moins un élément transversal (50), cas dans lequel la plate-forme à passerelle (20'') comprend une première plaque de raccordement (200) qui raccorde le quatrième support latéral allongé (30') au premier support latéral allongé (30) et une deuxième plaque de raccordement (200) qui raccorde le cinquième support latéral allongé (40') au deuxième support latéral allongé (40) ;
cas dans lequel les première et deuxième plaques de raccordement (200) sont chacune configurées de façon à raccorder respectivement le premier et le quatrième supports latéraux allongés ensemble, et le deuxième et le cinquième supports latéraux allongés ensemble suivant une orientation inclinée prédéterminée, et chacune des première et deuxième plaques de raccordement (200) définissant un premier groupe d'ouvertures (210) pour une orientation avec un chenal s'étendant longitudinalement (39, 49) de l'un des supports latéraux allongés, soit le premier soit le deuxième (30, 40), et un deuxième groupe d'ouvertures (220) pour une orientation avec un chenal s'étendant longitudinalement (39', 49') de l'un des supports latéraux allongés, soit le quatrième soit le cinquième (30', 40').

13. Plate-forme à passerelle (20'') selon la revendication 12, au moins une plaque, soit la première soit la deuxième (200), comprenant une ouverture de visualisation (230) pour permettre à un utilisateur d'inspecter une position d'extrémité des supports latéraux allongés raccordés à la plaque (200).
